# EUROPEAN PATENT SPECIFICATION

(11) **EP 2 983 015 B1**
(45) Date of publication and mention of the grant of the patent: **27.10.2021**
(21) Application number: 13881431.4
(22) Date of filing: 10.12.2013
(51) Int. Cl.: G02B 1/11, G02B 1/118

(54) **OPTICAL MEMBER**
OPTISCHES ELEMENT
ÉLÉMENT OPTIQUE

(30) Priority: 02.04.2013 JP 2013076664
(43) Date of publication of application: 10.02.2016
(73) Proprietor: Panasonic Intellectual Property Management Co., Ltd., Osaka-shi, Osaka 540-6207 (JP)
(72) Inventor: IWASE, Teppei, 1-61, Shiromi 2-chome Chuo-ku, Osaka-shi Osaka 540-6207 (JP); WADA, Tosihiko, 1-61, Shiromi 2-chome Chuo-ku, Osaka-shi Osaka 540-6207 (JP); TSURUTA, Takashi, 1-61, Shiromi 2-chome Chuo-ku, Osaka-shi Osaka 540-6207 (JP); MORIYAMA, Yuta, 1-61, Shiromi 2-chome Chuo-ku, Osaka-shi Osaka 540-6207 (JP)
(74) Representative: Grünecker Patent- und Rechtsanwälte PartG mbB
(86) International application number: PCT/JP2013/007241
(87) International publication number: WO 2014/162374

(56) References cited:
- WO-A1-2011/111697
- JP-A- 2008 164 996
- JP-A- 2008 164 996
- JP-A- 2010 117 694
- JP-A- 2010 262 303
- US-A1- 2005 088 746
- US-A1- 2009 135 355
- US-A1- 2011 102 900
- US-A1- 2012 026 591

## Description

### Technical Field

The present invention relates to an optical member having an optical function, for example, antireflection on the surface, such as an optical film, a lens, and a display.

### Background Art

Conventionally, a widely used optical member has a surface microstructure that is sized for a wavelength.

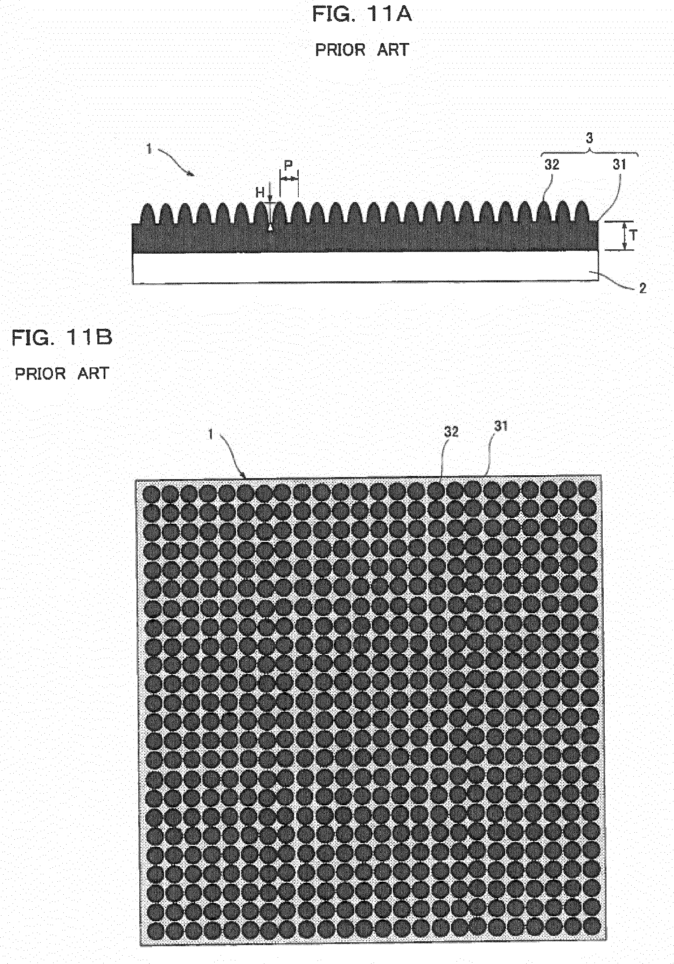

For example, an optical member 1 shown in FIGS. 11A and 11B has an antireflective layer 3 formed on a surface of a planar substrate 2. In order to suppress interface reflection caused by a difference in refractive index between air and a film, a lens substrate, and so on, the antireflective layer 3 serving as an interface has an infinite number of fine asperities sized for an optical wavelength or less, gradually changing a refractive index. Such asperities are called a moth-eye structure. The antireflective layer 3 includes a residual film 31 having a thickness T and fine protrusions 32 disposed on the residual film 31 in a group. The protrusions 32 have a protrusion height of H with an interval of protrusion repetition, that is, a pitch of P.

Such a relief structure is typically formed by using nanoimprinting. Specifically, ultraviolet curing or thermosetting resin is applied onto the planar substrate 2 and then is pressed with a molding die having shapes inverted from desired asperities. Subsequently, the resin is cured by ultraviolet irradiation or heat, and then the molding die is removed.

The moth-eye structure used for such optical members belongs to a well-known technique. The fine asperities vary in shape and layout among manufacturers. For example, in Patent Literature 1, the protrusions 32 are circularly arranged and are conically protruded with an oval shape having a major axis in the circumferential direction. In Patent Literature 2, the tops of the projecting portions of the protrusions 32 are connected to the adjacent projecting portions with a certain ratio or less. In this way, some structures relate to features obtained by methods of forming relief structures.

For example, in Patent Literature 3, a mark region is provided only at a specific position in a member and only a relief structure in the mark region is formed with a different layout and a different height from other regions, thereby preventing replication of an original form for forming the relief structure.

US 2012/002569 A1 relates to an optical element, display device and an anti-reflective optical component. US 2005/0088746 A1 relates to a light quantity distributioncontrol element. JP 2010 262303 A relates to an optical element, liquid crystal apparatus and electronic equipment. US 2011/102900 A1 relates to an optical element.

### Citation List

### Patent Literatures

Patent Literature 1: Japanese Patent Laid-Open No. 2009-109755
Patent Literature 2: WO2010143503 A1
Patent Literature 3: Japanese Patent Laid-Open No. 2007-79005

### Disclosure of the Invention

### Technical Problem

In the conventional configurations of Patent Literatures 1 and 2, however, it is unfortunately difficult to determine the cause of a defect that is confirmed on a member such as a formed film by any means. Specifically, when performance variations caused by deformation of a relief structure on a film are confirmed, it is difficult to decide whether the cause is intrusion of foreign matters during molding or a defect of the above-described molding die. Even if the cause can be limited to a defect of the mold rather than foreign matters during molding, the film of a molding size is divided into analysis samples that are sized for various analysis sample stages used for microscopes and so on and the relief structure on the film is composed of an infinite number of repeated identical relief structures. Thus, it is quite time-consuming and expensive to accurately locate a defect on the overall film and the original die.

In Patent Literature 3 and so on, mark regions are provided at any positions of a mold and a member and the layout and height of the relief structure are changed only in the regions, allowing analysis relative to the positions. However, a film is temporarily cut at any position according to the size of a device to be bonded to a large film and thus the cut film may not have any marks. Moreover, also on a film divided into samples for an analysis sample stage, a position may not be determined.

The present invention has been devised to solve the conventional problems. An object of the present invention is to provide an optical member so as to facilitate determination of the cause of a defect and feedback to a molding die in the optical member having a plurality of surface relief structures.

### Solution to Problem

In order to attain the object, an optical member according to the present invention is defined in claim 1. Another optical member according to the present invention is defined in claim 2.

Further advantageous embodiments are defined in dependent claims.

### Advantageous Effects of Invention

According to the present invention, position coordinates to the second region closest to a defective point are precisely stored with a high magnification on an analyzer. Thus, in the optical member, only the grid region of the defective point in the second region is mapped. This can precisely specify the defective point in the overall optical member and a position in a mold used for molding the optical member. Thus, the optical member and the apparatus can be provided so as to facilitate determination of the cause of a defect and feedback to the molding die, achieving higher member quality and yields.

### Brief Description of Drawings

[FIG. 1A] FIG. 1A is a cross-sectional view schematically showing an optical member according to a first illustrative example not according to the invention.
[FIG. 1B] FIG. 1B is a plan view schematically showing the optical member according to the first illustrative example.
[FIG. 2A] FIG. 2A is a schematic drawing showing a method of manufacturing the optical member according to the first illustrative example.
[FIG. 2B] FIG. 2B is a schematic drawing showing another method of manufacturing the optical member according to the first illustrative example.
[FIG. 2C] FIG. 2C is a schematic drawing showing still another method of manufacturing the optical member according to the first illustrative example.
[FIG. 3] FIG. 3 is a plan view schematically showing an optical member according to a second illustrative example not according to the invention.
[FIG. 4] FIG. 4 is a plan view schematically showing another example of the optical member according to the second illustrative example.
[FIG. 5] FIG. 5 is a cross-sectional view schematically showing an optical member according to a third embodiment of the present invention.
[FIG. 6] FIG. 6 is a cross-sectional view schematically showing another example of the optical member according to the third embodiment.
[FIG. 7] FIG. 7 is a cross-sectional view schematically showing still another example of the optical member according to the third embodiment.
[FIG. 8] FIG. 8 is a cross-sectional view schematically showing still another example of the optical member according to the third embodiment.
[FIG. 9] FIG. 9 is a cross-sectional view schematically showing an optical member according to a fourth illustrative example not according to the invention.
[FIG. 10] FIG. 10 is a cross-sectional view schematically showing another example of the optical member according to the fourth illustrative example.
[FIG. 11A] FIG. 11A is a cross-sectional view showing an optical member with a surface relief structure formed according to the related art.
[FIG. 11B] FIG. 11B is a plan view showing the optical member with the surface relief structure formed according to the related art.
[FIG. 12] FIG. 12 is a cross-sectional view schematically showing an optical member according to still another embodiment of the present invention.

### Description of Embodiments

Embodiments of the present invention will be described below with reference to the accompanying drawings.

### (First Illustrative Example not part of the invention but facilitates understanding of the invention)

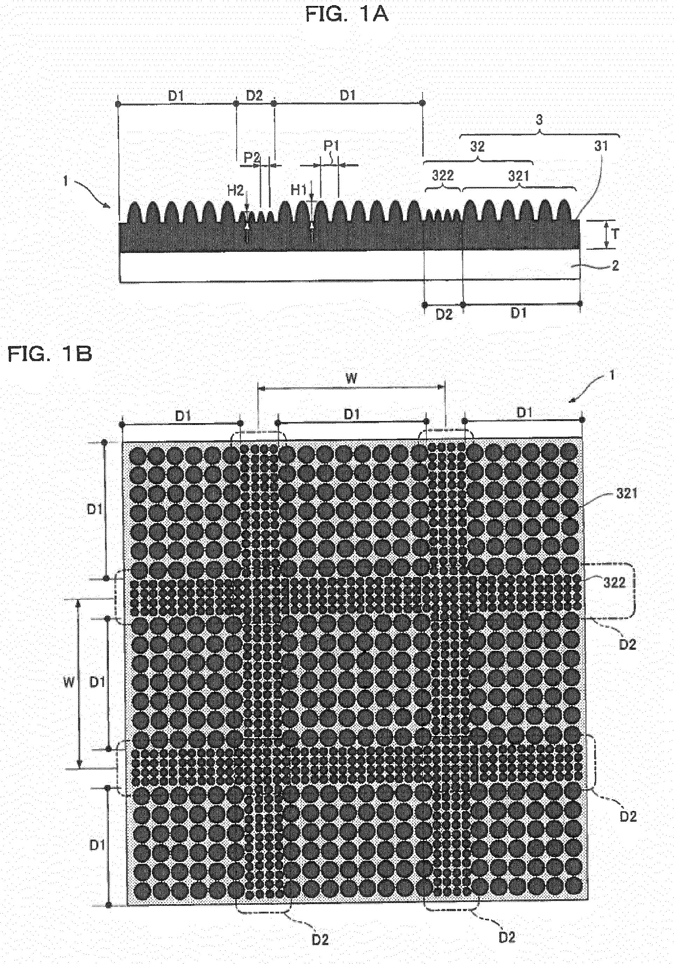

FIG. 1A is a cross-sectional view of an optical member according to the first illustrative example. FIG. 1B is a plan view showing the member surface of the optical member.

An optical member 1 includes an antireflective layer 3 formed on a planar substrate 2. The antireflective layer 3 includes a residual film 31 having a thickness T and fine protrusions 32 formed on the residual film 31.

The protrusions 32 of different shapes are provided in first regions D1 and second regions D2. In the first region D1, the protrusions have a height of H1 formed with an interval of protrusion repetition, that is, a pitch of P1. In the second region D2, the protrusions have a height of H2 formed with an interval of protrusion repetition, that is, a pitch of P2. The protrusions formed in the first region D1 will be called first protrusions 321 while the protrusions formed in the second region D2 will be called second protrusions 322. The first protrusions 321 are surrounded by the second protrusions 322. The second protrusions 322 are formed on grid lines having principal axes along a first direction optionally set in the surface of the optical member and a second direction set at a certain angle with respect to the first direction. Specifically, as shown in FIG. 1B, the second regions D2 are disposed in a grid-like fashion over the optical member 1, that is, the second regions D2 are vertically and horizontally disposed in parallel in FIG. 1B. The second regions D2 are spaced with a grid interval W.

With this configuration, the second protrusions 322 are periodically formed over the grid-like second regions D2 with a different protrusion height and a different center distance between the adjacent protrusions from the first protrusions 321 of the first regions D1 formed substantially over the optical member 1. This configuration can easily determine the cause of a defect of the optical member 1 and a defect of a molding die unlike in the conventional example. The reason will be specifically described below.

If a defect such as a deposited foreign matter and an abnormal surface appears on the optical member 1, the relative position of the defect needs to be highly accurately determined with respect to the visible outline of the member in order to specify the cause of the defect on the molding die. In various analyzers such as a microscope for defect analysis, however, the size of a sample which can be set is limited and thus varies the cutting of the member. Moreover, the screen size of an analysis monitor is also limited and thus varies feeding to a stage, leading to difficulty in precise feedback of position information.

In the optical member 1 of the first example, the fine protrusions of about 300 nm, which is a visible wavelength or less, are formed. The regions of the first protrusions 321 and the second protrusions 322 having different shapes cannot be discriminated from each other, which does not deteriorate the visible quality of the optical member. However, a fine shape of 300 nm or less is directly measured by a device such as an atomic force microscope or a scanning electron microscope. A difference in fluorescence intensity according to a protrusion height is used by an evaluating device such as a confocal laser microscope. A small difference in reflectivity between the first protrusion 321 and the second protrusion 322 having different shapes is used by a spectroreflectometer. A laser microscope or the like can discriminate between the first region D1 and the second region D2, thereby locating the second region D2 having different shapes from the first protrusions 321.

For example, if a defect appears at a predetermined point of the optical member 1, position coordinates to a grid region closest to the defective point are precisely stored with a high magnification on various analyzers by using the second region D2. Thus, in the optical member 1, only the grid region of the defective point in the second region D2 is mapped with a laser microscope having a relatively low magnification. This can precisely specify the defective point in the overall optical member 1 and a position in the mold used for molding the optical member 1.

Moreover, in the formation of the optical member 1, a molding die sufficiently smaller than the area of the optical member 1 may be prepared to be regularly and repeatedly transferred at any pitch, molding the optical member 1. In this case, it is decided whether or not a defect of the optical member appears with the same period as the transfer pitch of the die, thereby quickly deciding whether the mold is the cause of the defect or not.

A small difference of reflectivity that changes depending on the shapes of the first protrusions 321 and the second protrusions 322 is not recognized by a visual check and a stereoscopic microscope or the like. Thus, the quality of an optical function such as antireflection is not deteriorated in appearance and practical use unlike in the optical member of the conventional example.

The dimensions of the protrusions 32 on the optical member 1 formed thus will be specifically described below.

The pitches P1 and P2 need to be equal to a visible wavelength or less, about 300 nm or less, as distances required for providing antireflection for the member, whereas the heights H1 and H2 are desirably 150 nm or more because an aspect ratio of at least 0.5 is necessary for the width of the protrusion.

Furthermore, the first region D1 and the second region D2 need to be clearly discriminated from each other on an analyzer used for analyzing a film. Thus, regarding variations of tolerance of the pitch P1 and the height H1 of the first protrusions 321 in the first region D1 and the pitch P2 and the height H2 of the second protrusions 322 in the second region D2, for example, P1 is desirably about a half of P2 while H1 is desirably at least about a half of H2.

The pitch W for the layout of the second regions D2 is desirably equal to a maximum size of the optical member 1 to be cut on various analyzers in use, for example, about 10 mm. This is because respective pieces obtained by cutting the optical member 1 in the use of the various analyzers surely need to contain the second region D2.

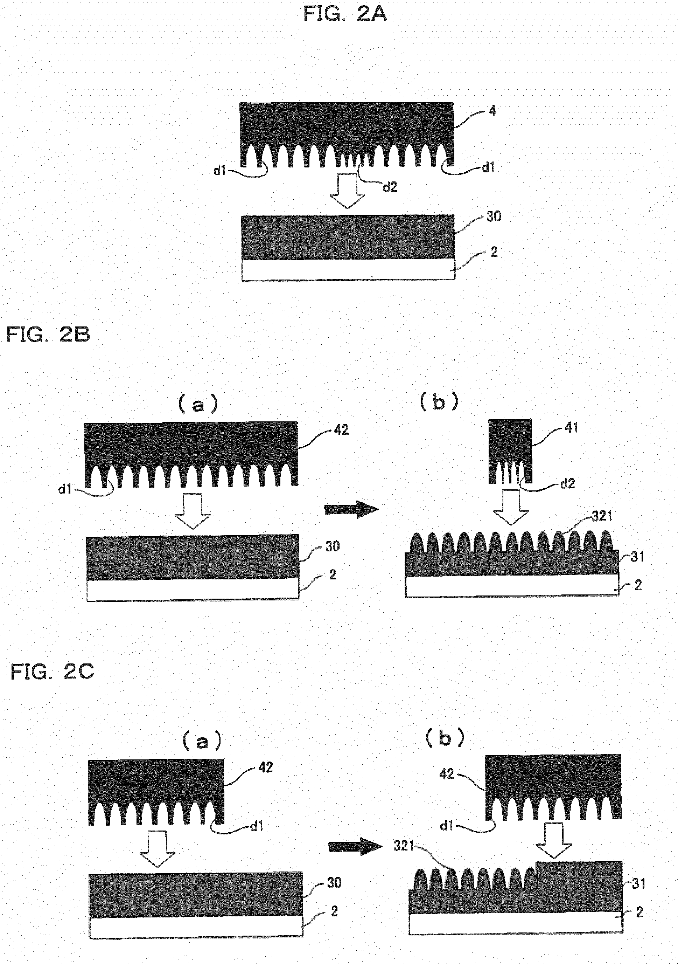

Referring to FIGS. 2A, 2B, and 2C, a method of allocating and forming the first and second protrusions 321 and 322 having different heights and pitches into the first and second regions D1 and D2 will be specifically described below.

As has been discussed, the first protrusions 321 and the second protrusions 322 are formed as follows: ultraviolet curing or thermosetting resin is coated onto the planar substrate 2 and then is pressed with the molding die having a shape inverted from a desired asperity, transferring the shape to the resin. Subsequently, the resin is cured by ultraviolet irradiation or heat. More specifically, the optical member 1 can be manufactured by any processes shown in FIGS. 2A, 2B, and 2C.

As shown in FIG. 2A, recesses d1 and d2 are formed on the molding surface of a mold 4 for the first and second protrusions 321 and 322 having different pitches and heights in the first region D1 and the second region D2 shown in FIGS. 1A and 1B. Transferring of the mold 4 to resin 30 coated over the planar substrate 2 forms the first and second protrusions 321 and 322 having inverted shapes.

As shown in FIG. 2B(a), a mold 42 is first used for collective transfer to the resin 30. Only the recesses d1 inverted from the first protrusions 321 are formed over the mold 42. In FIG. 2B(b), the second protrusions 322 are formed by another transferring to the predetermined second region D2 by means of a small mold 41 on which the recesses d2 inverted from the second protrusions 322 are formed.

As shown in FIG. 2C(a), partial transfer is performed to the resin 30 on the planar substrate 2 by means of the mold 42 as wide as the first region D1. Only the recesses d1 inverted from the first protrusions 321 are formed over the mold 42. In FIG. 2C(b), another transfer is performed with the mold 42 used in FIG. 2C(a) such that the mold 42 only overlaps the part of the second region D2 while being shifted by about a half pitch so as not to completely align the positions of the recesses of the mold with the transferred first protrusions 321.

In the present example, the pitches P1 and P2 and the heights H1 and H2 are varied. The first region D1 and the second region D2 can be discriminated from each other only by varying the pitches or the heights.

In FIG. 1B, for convenience, the protrusion height H2 and the pitch P2 of the second protrusion 322 in the grid-like formed second regions D2 are smaller than the protrusion height H1 and the pitch P1 of the first protrusion 321 in the first regions D1. A difference in shape among the protrusions is not particularly limited to obtain the advantage of the present example. The protrusion height H2 and the pitch P2 may be larger than the protrusion height H1 and the pitch P1. The protrusions in a tetragonal grid in FIG. 1B may be arranged in three ways.

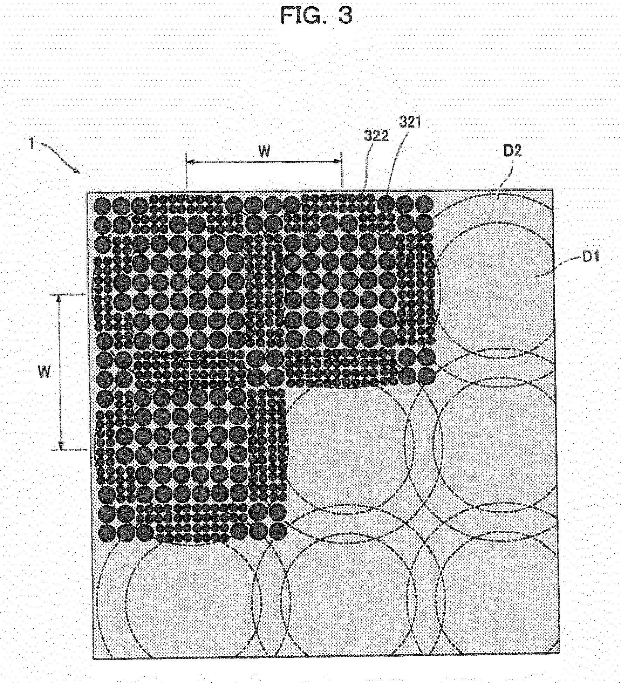

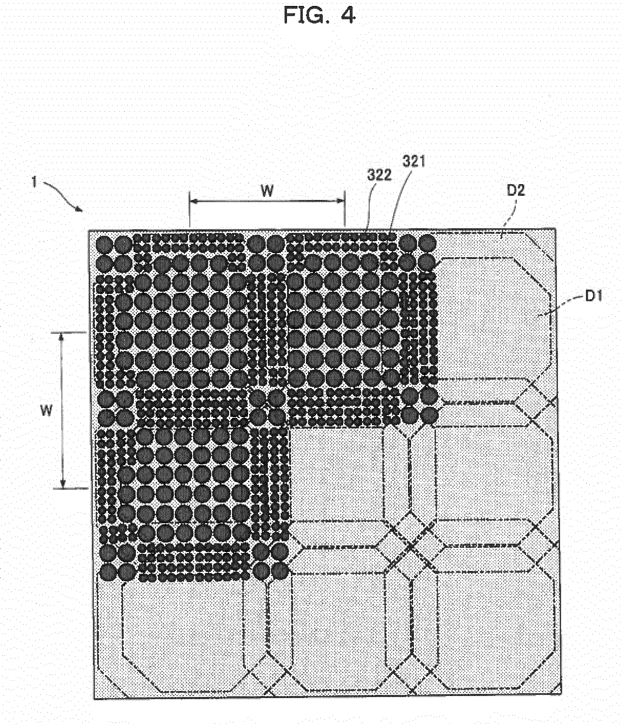

(Second Illustrative example not part of the invention but facilitates understanding of the invention) FIGS. 3 and 4 are plan views showing an optical member from a member surface according to the second Illustrative example.

In FIG. 1B, the second regions D2 are disposed in a grid-like pattern over the optical member 1, that is, the second regions D2 are vertically and horizontally disposed in parallel in FIG. 1B. In the gridlike pattern, if a display size on the screen of an analyzer is smaller than a grid size, it may be difficult to extract positional information in a grid even if the second regions D2 are partially displayed on the screen. In the second example, areas where second regions D2 are disposed are formed in an annular shape and disposed at a predetermined pitch as shown in FIG. 3 or are formed in a polygonal pattern and disposed at a predetermined pitch as shown in FIG. 4. Therefore, the second regions D2 partially displayed on the screen of an analyzer can be easily located using the angles and the layout patterns of the second regions D2.

In FIG. 3, second protrusions 322 are formed on circles that are centered with any diameter at any intervals in any layout in the surface of an optical member 1.

In FIG. 4, the second protrusions 322 are formed on polygonal visible outlines that are centered with any side lengths at any intervals in the surface of the optical member 1.

### (Third Embodiment)

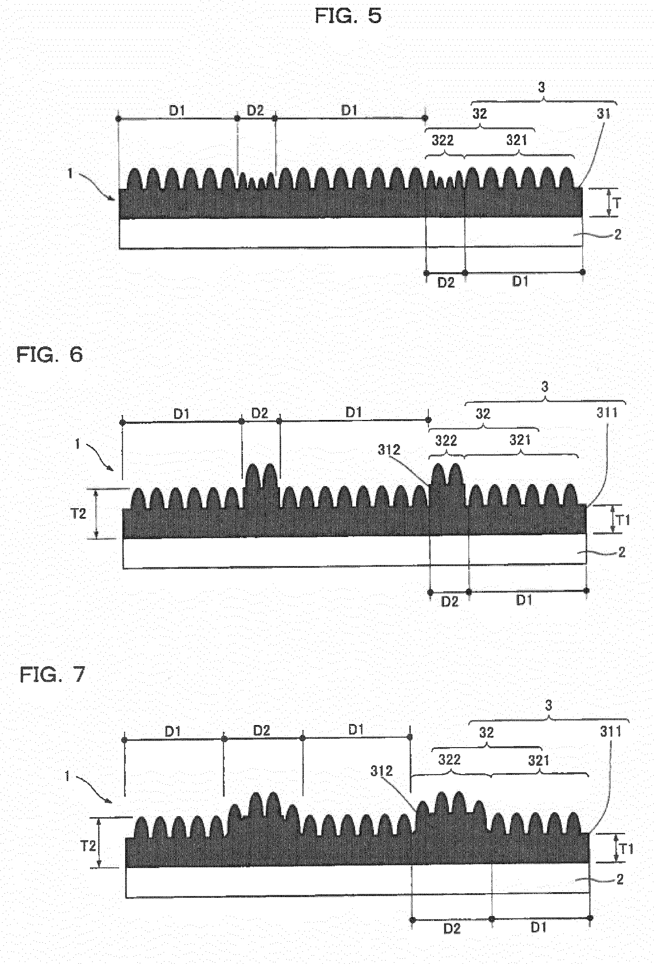

FIGS. 5 to 8 show a third embodiment of the present invention.

In the first and second examples, the first protrusions 321 formed in the first regions D1 are all identical in shape and the second protrusions 322 formed in the second regions D2 are all identical in shape. The first protrusions 321 formed in the first regions D1 and the second protrusions 322 formed in the second regions D2 may have different shapes from each other.

In the example of FIG. 5, second protrusions 322 in a second region D2 gradually vary in shape. For example, the second protrusions 322 gradually decrease in height from the boundary with a first region D1 to the inside of the second region D2. The second protrusions 322 formed thus can suppress reflectivity fluctuations caused by the heights of protrusions, thereby improving visual quality without reducing the detection sensitivity of the first region D1 and the second region D2 in various analyzers.

In the example of FIG. 6, the second protrusions 322 are as high as first protrusions 321, whereas the heights of the proximal ends of the second protrusions 322 are different from those of the first protrusions 321. Specifically, a second residual film 311 in the first protrusion 321 formed in the first region D1 has a thickness T1 that is different from a thickness T2 of a second residual film 312 in the second protrusion 322 formed in the second region D2. Also in this configuration, an external light transmission factor varying depending on the different residual films can be discriminated on various analyses so as to obtain the same effect.

Furthermore, in the example of FIG. 7, the film thickness is uneven in the first region D1 and the second region D2 unlike in FIG. 6. The second protrusions 322 are formed in the second region D2 so as to gradually vary in shape. For example, the thickness T2 of the second residual film 312 gradually decreases to the thickness T1 of the first residual film 311 toward the boundary with the first region D1. This configuration can suppress a transmissivity change depending on a film thickness, thereby improving visual quality without reducing detection sensitivity in various analyzers.

As shown in FIGS. 6 and 7, the protrusion heights of the second protrusions 322 or the thicknesses of the residual films are gradually changed. Alternatively, the pitches of the second protrusions 322 may be gradually changed from the boundary with the first region D1 toward the inside of the second region D2 containing the second protrusions 322 formed.

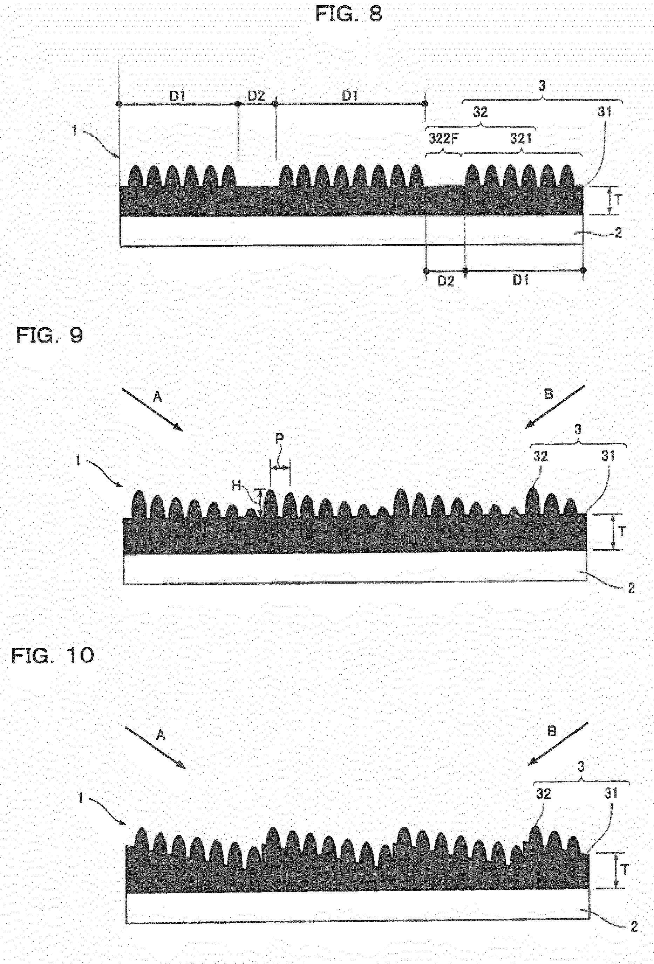

In the foregoing embodiments, the second protrusions 322 are formed in the second region D2. In the example not according to the invention of FIG. 8, the second region D2 has a surrounding flat part 322F that does not have a surface relief structure formed. This configuration can also improve the detection sensitivity of the first region D1 and the second region D2 on an analyzer. In this case, the second region D2 desirably has a width of several tens µm or less to obtain visual quality.

The detailed layout of the flat second region D2 having no protrusions formed in the surface of an optical member 1 in FIG. 8 is identical to those of the first and second examples. Specifically, as in FIG. 1B, the flat second regions D2 having no protrusions formed are formed on grid lines having principal axes along a first direction optionally set in the surface of the optical member 1 and a second direction set at a certain angle with respect to the first direction. Alternatively, as in FIG. 3, the flat second regions D2 having no protrusions formed are formed on circles that are centered with any diameters at any intervals in any layout in the surface of the optical member, or as in FIG. 4, the flat second regions D2 having no protrusions formed are formed on polygonal visible outlines that are centered with any side lengths at any intervals in the surface of the optical member 1.

### (Fourth Illustrative example not part of the invention but facilitates understanding of the invention)

FIGS. 9 and 10 show the fourth illustrative example.

The foregoing examples and embodiments described differences in protrusion shape and thickness between the first protrusions 321 in the first region D1 and the second protrusions 322 in the second region D2. The present teaching is not limited to this configuration.

For example, in an optical member 1, the same effect can be obtained by gradually changing a protrusion height H with any period as shown in FIG. 9 or gradually changing a thickness 31 as shown in FIG. 10.

In FIGS. 9 and 10, the protrusion height or the thickness rapidly change at some locations and thus visual quality may deteriorate depending on the incidence angle of external light or a viewing direction. In this case, a viewing angle where the quality deteriorates is determined. Thus, the viewing angle is limited in product use so as to keep the same quality as in the related art.

In the case where the optical member in FIG. 9 or 10 is bonded to a display, the bonding direction may be limited to a first viewing direction A directed downward or to the left in FIG. 9 or 10 according to the property of quality that deteriorates only in the first viewing direction A in FIG. 9 or 10 rather than in a second viewing direction B in FIG. 9 or 10.

In an actual product, an optical member may be bonded to a display in a predetermined direction. In this case, the member is bonded with vertical and horizontal orientations confirmed beforehand according to optical properties varying between the first viewing direction A and the second viewing direction B. This can prevent failures caused by a bonding mistake.

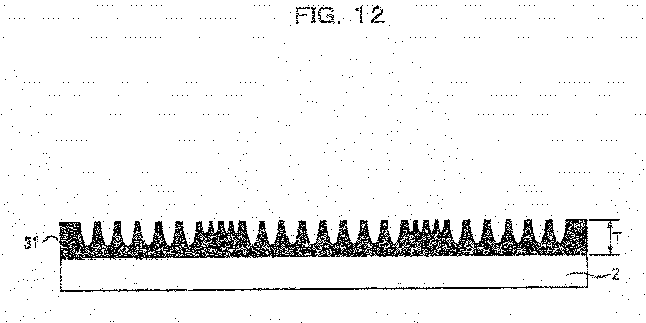

In the embodiments of the specification, a microstructure of the protrusions appearing from the top surface of the residual film 31 on the surface of the planar substrate 2 is described as antireflective protrusions. A relief structure having an optical function is not limited to this structure. In a comparative example not according to the invention, as shown in FIG. 12, the structure may have various shapes including a concave shape formed from the surface of the residual film 31 having the thickness T to the substrate 2, a linear relief structure, and a prismatic shape.

### Industrial Applicability

The present invention has been devised to solve the problems of optical quality of general display products or lens products, thereby improving member quality and yields in an optical member or apparatus having a plurality of relief structures on the surface of the optical member or apparatus.

### Reference Signs List

1 optical member
2 planar substrate
3 antireflective layer
30 a resin layer coated in the step of forming the antireflective layer
31 a residual film after the antireflective layer is formed
32 protrusions
D1 first region
D2 second region
311 first residual film
312 second residual film
321 first protrusions
322 second protrusions
P1 the pitch of the first protrusions 321
H1 the protrusion height of the first protrusions 321
P2 the pitch of the second protrusions 322
H2 the protrusion height of the second protrusions 322
T1 the thickness of the residual film of the first protrusions 321
T2 the thickness of the residual film of the second protrusions 322
W an interval at which the second regions D2 are formed

## Claims

1. An optical member comprising:
an antireflective layer (3) including a residual film (31) and a plurality of protrusions (32) formed on the residual film (31) and providing antireflection on a surface of the antireflective layer (3), wherein
the protrusions (32) including first protrusions (321) and second protrusions (322),
the first protrusions (321) are formed in a first region (D1) and the second protrusions (322) are formed in a second region (D2), and
**characterized in that** the first protrusions (321) are surrounded by the second protrusions (322) having a different periodic position on the surface of the optical member from the
first protrusions (321),
the second protrusions (322) have a different protrusion height from the first protrusions (321),
a pitch (P1) between the first protrusions (321) and a pitch (P2) between the second protrusions (322) are equal to a wavelength of visible light or less, a height (H1) of the first protrusions (321) and a height (H2) of the second protrusions (322) are 150 nm or more, and
the second protrusions (322) protrude so as to gradually decrease in height from a boundary with the first region (D1) toward an inside of the second region (D2).

2. An optical member comprising:
an antireflective layer (3) including a residual film (31) and a plurality of protrusions (32) formed on the residual film (31) and providing antireflection on a surface of the antireflective layer (3), wherein
the protrusions (32) including first protrusions (321) and second protrusions (322),
the first protrusions (321) are formed in a first region (D1) and the second protrusions (322) are formed in a second region (D2), and
the first protrusions (321) are surrounded by the second protrusions (322), the second protrusions (322) are as high as the first protrusions (321),
the residual film including a first residual film (311) and a second residual film (312) different in thickness (T2) from thickness (T1) of the first residual film, the first protrusions (321) formed on the first residual film (311) and the second protrusions (322) formed on the second residual film (312),
**characterized in that**
a pitch (P1) between the first protrusions (321) and a pitch (P2) between the second protrusions (322) are equal to a wavelength of visible light or less, a height (H1) of the first protrusions (321) and a height (H2) of the second protrusions (322) are 150 nm or more.

3. The optical member according to claim 2, wherein the thickness (T2) of the second residual film (312) gradually decreases to the thickness (T1) of the first residual film (311) toward a boundary with the first region (D1).

4. The optical member according to claim 1, wherein the second protrusions (322) are formed on grid lines having principal axes along a first direction optionally set in the surface of the optical member and a second direction set at a certain angle with respect to the first direction.

## Patentansprüche

1. Optisches Element, das umfasst:
eine Antireflexschicht (3), die einen Restfilm (31) und eine Vielzahl von Vorsprüngen (32) einschließt, die auf dem Restfilm (31) ausgebildet sind und Entspiegelung an einer Oberfläche der Antireflexschicht (3) bewirken, wobei
die Vorsprünge (32) erste Vorsprünge (321) und zweite Vorsprünge (322) einschließen,
die ersten Vorsprünge (321) in einem ersten Bereich (D1) ausgebildet sind und die zweiten Vorsprünge (322) in einem zweiten Bereich (D2) ausgebildet sind, und
**dadurch gekennzeichnet, dass**
die ersten Vorsprünge (321) von den zweiten Vorsprüngen (322) umgeben sind, die eine andere periodische Position an der Oberfläche des optischen Elementes haben als die ersten Vorsprünge (321),
die zweiten Vorsprünge (322) um eine andere Höhe vorstehen als die ersten Vorsprünge (321),
ein Abstand (P1) zwischen den ersten Vorsprüngen (321) und ein Abstand (P2) zwischen den zweiten Vorsprüngen (322) genauso groß sind wie oder kleiner als eine Wellenlänge von sichtbarem Licht, eine Höhe (H1) der ersten Vorsprünge (321) und eine Höhe (H2) der zweiten Vorsprünge (322) 150 nm oder mehr betragen, und
die zweiten Vorsprünge (322) so vorstehen, dass ihre Höhe von einer Grenze zu dem ersten Bereich (D1) in Richtung einer Innenseite des zweiten Bereiches (D2) allmählich abnimmt.

2. Optisches Element, das umfasst:
eine Antireflexschicht (3), die einen Restfilm (31) und eine Vielzahl von Vorsprüngen (32) einschließt, die auf dem Restfilm (31) ausgebildet sind und Entspiegelung an einer Oberfläche der Antireflexschicht (3) bewirken, wobei
die Vorsprünge (32) erste Vorsprünge (321) und zweite Vorsprünge (322) einschließen,
die ersten Vorsprünge (321) in einem ersten Bereich (D1) ausgebildet sind und die zweiten Vorsprünge (322) in einem zweiten Bereich (D2) ausgebildet sind, und
die ersten Vorsprünge (321) von den zweiten Vorsprüngen (322) umgeben sind,
die zweiten Vorsprünge (322) genauso hoch sind wie die ersten Vorsprünge (321),
der Restfilm einen ersten Restfilm (311) und einen zweiten Restfilm (312) einschließt, der eine andere Dicke (T2) hat als die Dicke (T1) des ersten Restfilms, wobei die ersten Vorsprünge (321) auf dem ersten Restfilm (311) ausgebildet sind und die zweiten Vorsprünge (322) auf dem zweiten Restfilm (312) ausgebildet sind,
**dadurch gekennzeichnet, dass**
ein Abstand (P1) zwischen den ersten Vorsprüngen (321) und ein Abstand (P2) zwischen den zweiten Vorsprüngen (322) genauso groß sind wie oder kleiner als eine Wellenlänge von sichtbarem Licht, eine Höhe (H1) der ersten Vorsprünge (321) und eine Höhe (H2) der zweiten Vorsprünge (322) 150 nm oder mehr betragen.

3. Optisches Element nach Anspruch 2, wobei die Dicke (T2) des zweiten Restfilms (312) in Richtung einer Grenze zu dem ersten Bereich (D1) allmählich auf die Dicke (T1) des ersten Restfilms (311) abnimmt.

4. Optisches Element nach Anspruch 1, wobei die zweiten Vorsprünge (322) auf Gitterlinien ausgebildet sind, die Hauptachsen entlang einer ersten Richtung, die optional an der Oberfläche des optischen Elementes festgelegt ist, und einer zweiten Richtung haben, die in einem bestimmten Winkel in Bezug auf die erste Richtung festgelegt ist.

## Revendications

1. Élément optique comprenant :
une couche antireflet (3) incluant un film résiduel (31) et une pluralité de protrusions (32) constituées sur le film résiduel (31) et fournissant un effet antireflet sur une surface de la couche antireflet (3), dans lequel
les protrusions (32) incluant des premières protrusions (321) et des deuxièmes protrusions (322), les premières protrusions (321) sont constituées dans une première zone (D1) et les deuxièmes protrusions (322) sont constituées dans une deuxième zone (D2), et
**caractérisé en ce que** les premières protrusions (321) sont entourées par les deuxièmes protrusions (322) présentant une position périodique sur la surface de l'élément optique différente des premières protrusions (321),
les deuxièmes protrusions (322) présentent une hauteur de protrusion différente des premières protrusions (321),
un pas (P1) entre les premières protrusions (321) et un pas (P2) entre les deuxièmes protrusions (322) sont inférieurs ou égaux à une longueur d'onde de lumière visible, une hauteur (H1) des premières protrusions (321) et une hauteur (H2) des deuxièmes protrusions (322) sont de 150 nm ou plus, et
les deuxièmes protrusions (322) dépassent de sorte à diminuer progressivement en hauteur depuis une limite avec la première zone (D1) vers un intérieur de la deuxième zone (D2).

2. Élément optique comprenant :
une couche antireflet (3) incluant un film résiduel (31) et une pluralité de protrusions (32) constituées sur le film résiduel (31) et fournissant un effet antireflet sur une surface de la couche antireflet (3), dans lequel
les protrusions (32) incluant des premières (321) et des deuxièmes protrusions (322),
les premières protrusions (321) sont constituées dans une première zone (D1) et les deuxièmes protrusions (322) sont constituées dans une deuxième zone (D2), et
les premières protrusions (321) sont entourées par les deuxièmes protrusions (322), les deuxièmes protrusions (322) sont aussi hautes que les premières protrusions (321),
le film résiduel incluant un premier film résiduel (311) et un deuxième film résiduel (312) différent en épaisseur (T2) d'une épaisseur (T1) du premier film résiduel, les premières protrusions (321) constituées sur le premier film résiduel (311) et les deuxièmes protrusions (322) constituées sur le deuxième film résiduel (312),
**caractérisé en ce que**
un pas (P1) entre les premières protrusions (321) et un pas (P2) entre les deuxièmes protrusions (322) sont inférieurs ou égaux à une longueur d'onde de lumière visible, une hauteur (H1) des premières protrusions (321) et une hauteur (H2) des deuxièmes protrusions (322) sont de 150 nm ou plus.

3. L'élément optique selon la revendication 2, dans lequel l'épaisseur (T2) du deuxième film résiduel (312) diminue progressivement jusqu'à l'épaisseur (T1) du premier film résiduel (311) vers une limite avec la première zone (D1).

4. L'élément optique selon la revendication 1, dans lequel les deuxièmes protrusions (322) sont constituées sur des lignes de grille présentant des axes principaux le long d'une première direction facultativement définie dans la surface de l'élément optique et une deuxième direction définie selon un certain angle par rapport à la première direction.
